# FASCICULE DE BREVET EUROPEEN

(11) **EP 3 479 156 B1**
(45) Date de publication et mention de la délivrance du brevet: **03.03.2021**
(21) Numéro de dépôt: 17733468.7
(22) Date de dépôt: 28.06.2017
(51) Int. Cl.: G02B 19/00, G02B 7/00, G03B 21/00, G03B 21/16, G03B 21/20, G02B 27/01

(54) **DISPOSITIF DE GÉNÉRATION D'IMAGES COMPRENANT UNE ZONE DE CONTACT THERMIQUE, ET AFFICHEUR TÊTE HAUTE ASSOCIÉ**
BILDERZEUGUNGSVORRICHTUNG MIT EINER THERMISCHEN KONTAKTZONE UND ENTSPRECHENDE HEAD-UP-ANZEIGE
IMAGE GENERATING DEVICE COMPRISING A THERMAL CONTACT ZONE, AND ASSOCIATED HEAD-UP DISPLAY

(30) Priorité: 29.06.2016 FR 1656140
(43) Date de publication de la demande: 08.05.2019
(73) Titulaire: Valeo Comfort and Driving Assistance, 94046 Créteil Cedex (FR)
(72) Inventeur: PIERRE, Lenaic, 94046 Créteil Cedex (FR)
(74) Mandataire: Delplanque, Arnaud
(86) Numéro de dépôt international: PCT/EP2017/066072
(87) Numéro de publication internationale: WO 2018/002187

(56) Documents cités:
- WO-A1-2015/159030
- US-A1- 2004 062 040
- US-A1- 2015 300 576

## Description

### DOMAINE TECHNIQUE AUQUEL SE RAPPORTE L'INVENTION

La présente invention concerne de manière générale le domaine des afficheurs tête haute pour véhicule.

Elle concerne plus particulièrement un dispositif de génération d'images pour afficheur tête haute comprenant au moins une source de lumière, un écran adapté à être rétroéclairé par ladite source de lumière, et un réflecteur, disposé entre ladite source de lumière et ledit écran, et adapté à réfléchir au moins en partie la lumière émise par la source de lumière.

L'invention s'applique particulièrement avantageusement au cas où l'on souhaite disposer le dispositif de génération d'images dans un logement de taille réduite du véhicule.

### ARRIERE-PLAN TECHNOLOGIQUE

Le principe des afficheurs tête haute pour véhicule est de projeter des images, notamment utiles à la conduite, directement dans le champ de vision d'un conducteur.

Pour cela, les afficheurs tête haute comprennent en général un dispositif de génération d'images adapté à générer des images et un dispositif de projection des images générées adapté à transmettre ces images vers une lame semi-transparente placée dans le champ de vision du conducteur.

La plupart des dispositifs de génération d'images utilisés aujourd'hui comprennent une source de lumière rétroéclairant un écran adapté à générer les images. Cet écran absorbe une partie de la lumière qui le rétroéclaire, ce qui provoque son échauffement thermique.

Or, la température de l'écran est critique pour son bon fonctionnement, ce dernier risquant d'être endommagé, voire d'être rendu défectueux, par une température trop élevée. L'échauffement de l'écran peut par conséquent réduire sa durée de vie et conduire à son remplacement.

Il est donc nécessaire de trouver des solutions visant à refroidir l'écran, ou à éviter son échauffement.

On sait que la température de l'écran est en grande partie liée à l'échauffement créé par la source de lumière qui le rétroéclaire, en particulier lorsque celle-ci comporte des diodes électroluminescentes (ou LEDs pour « *Light Emitting Diodes »*)*.*

On connaît ainsi une première solution consistant à placer une sonde de température dans le dispositif de génération d'images, cette sonde étant adaptée à contrôler la température de l'écran et à réguler automatiquement, en fonction de cette température, la puissance générée par la source de lumière.

Cette première solution présente un inconvénient majeur en ce que l'utilisateur n'obtient pas toujours un affichage avec le niveau de luminosité souhaité (notamment sur la lame) puisque la source de lumière peut être amenée à fonctionner à puissance réduite.

On connaît également une deuxième solution consistant à ouvrir, au moins partiellement, le dispositif de génération d'images afin d'évacuer la chaleur générées par le rayonnement lumineux de la source de lumière.

Néanmoins, cette deuxième solution ne garantit pas l'étanchéité du dispositif de génération d'images aux poussières. Ainsi, les optiques contenues dans le dispositif de génération d'images sont exposées aux poussières et risquent d'être détériorées.

En outre, cette deuxième solution implique que des fuites de lumière sont possibles depuis la source de lumière vers les autres éléments de l'afficheur tête haute. D'éventuels rayons parasites peuvent ainsi être générés dans l'ensemble de l'afficheur tête haute et la qualité finale de l'image générée est affectée. Les documents US20150300576, US20040062040 et WO 2015159030 présentent des dispositifs d'affichage connus.

### OBJET DE L'INVENTION

Afin de remédier aux inconvénients précités de l'état de la technique, la présente invention propose un dispositif de génération d'images conçu pour refroidir l'écran qu'il comprend, voire éviter l'échauffement dudit écran.

Plus particulièrement, on propose selon l'invention un dispositif de génération d'images (pour afficheur tête haute) tel que défini par la revendication 1.

Ainsi, grâce à l'invention, l'écran est en contact physique avec le réflecteur qui sert alors de radiateur thermique audit écran. Autrement dit, le réflecteur est ainsi adapté à drainer, par effet de conduction thermique, un surplus de chaleur de l'écran.

En outre, le réflecteur définissant un logement conçu pour loger l'écran permet un gain de place du dispositif de génération d'images dans son ensemble.

D'autres caractéristiques non limitatives et avantageuses du dispositif de génération d'images conforme à l'invention sont les suivantes :
- le réflecteur est réalisé en un matériau métallique ;
- le réflecteur est réalisé en un matériau polymère (plastique) métallisé en surface (par un traitement déposant une couche métallique telle qu'une couche d'aluminium, d'argent, ou de tout autre métal) ;
- le réflecteur est réalisé en un matériau polymère ionique ;
- le réflecteur est fermé d'un côté par ledit écran, de l'autre par ladite source de lumière, de sorte que ledit dispositif de génération d'images forme une enceinte close ;
- il est prévu un radiateur thermique disposé à l'arrière de la source de lumière ;
- il est prévu d'isoler thermiquement le réflecteur et un support de la source de lumière.

L'invention propose également un afficheur tête haute comprenant un dispositif de génération d'images tel que décrit précédemment et un dispositif de projection d'images adapté à transmettre en direction d'une lame semi-transparente les images générées par le dispositif de génération d'images.

Dans l'afficheur tête haute conforme à l'invention, le dispositif de projection d'images comprend un miroir agencé de manière à réfléchir en direction de la lame semi-transparente les images générées par le dispositif de génération d'images

### DESCRIPTION DETAILLEE D'UN EXEMPLE DE RÉALISATION

La description qui va suivre en regard des dessins annexés, donnés à titre d'exemples non limitatifs, fera bien comprendre en quoi consiste l'invention et comment elle peut être réalisée.

Sur les dessins annexés :
- la figure 1 est une représentation schématique d'un afficheur tête haute selon l'invention en position dans le véhicule ; et,
- la figure 2 est une représentation schématique en coupe d'un dispositif de génération d'images selon l'invention.

Dans la suite de la description, les termes « avant » et « arrière » seront utilisés pour désigner les éléments en position dans le véhicule automobile, par rapport à la direction longitudinale dudit véhicule automobile. L'avant désignera le côté d'un élément dirigé vers le conducteur, autrement dit le côté tourné vers le coffre, et l'arrière désignera le côté de cet élément tourné vers le capot.

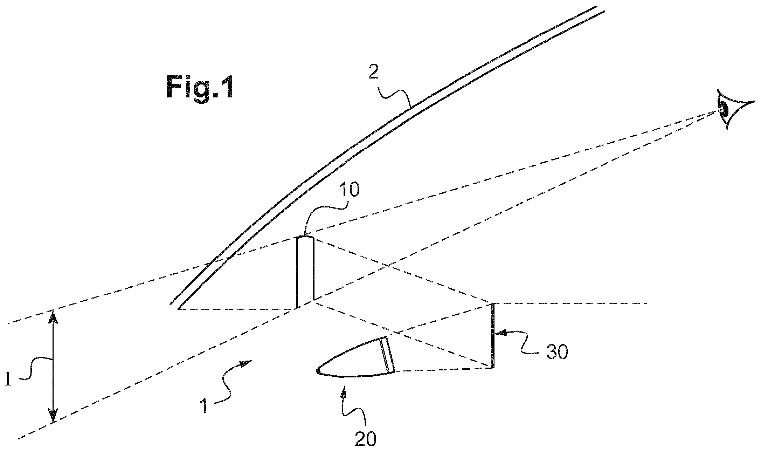

Sur la figure 1, on a représenté les éléments principaux d'un afficheur 1 tête haute destiné à équiper un véhicule, par exemple un véhicule automobile.

Un tel afficheur 1 est adapté à créer une image virtuelle I dans le champ de vision d'un conducteur du véhicule, de sorte que le conducteur puisse voir cette image virtuelle I et les informations éventuelles qu'elle contient sans avoir à détourner le regard.

A cet effet, l'afficheur 1 comprend une lame semi-transparente 10 placée dans le champ de vision du conducteur (voir figure 1), un dispositif de génération d'images 20 adapté à générer des images et un dispositif de projection 30 d'images adapté à renvoyer en direction de ladite lame semi-transparente 10 les images générées par l'unité de génération d'images 20.

Plus précisément, la lame semi-transparente 10 est ici un combineur 10, c'est-à-dire une lame semi-transparente dédiée à l'afficheur tête haute 1.

Un tel combineur 10 est ici placé entre le parebrise 2 du véhicule et les yeux du conducteur.

En variante, la lame semi-transparente pourrait être confondue avec le parebrise du véhicule. Autrement dit, dans cette variante, c'est le parebrise du véhicule qui a la fonction de lame-semi transparente pour l'afficheur tête haute.

Par ailleurs, ici, le dispositif de projection 30 d'images comprend un miroir de repliement agencé de manière à réfléchir les images générées par le dispositif de génération 20 d'images en direction de la lame semi-transparente 10. Ici, ledit miroir de repliement est un miroir plan.

En variante, le dispositif de projection d'images pourrait comprendre une pluralité de miroirs et/ou d'autres éléments optiques tels qu'une lentille par exemple.

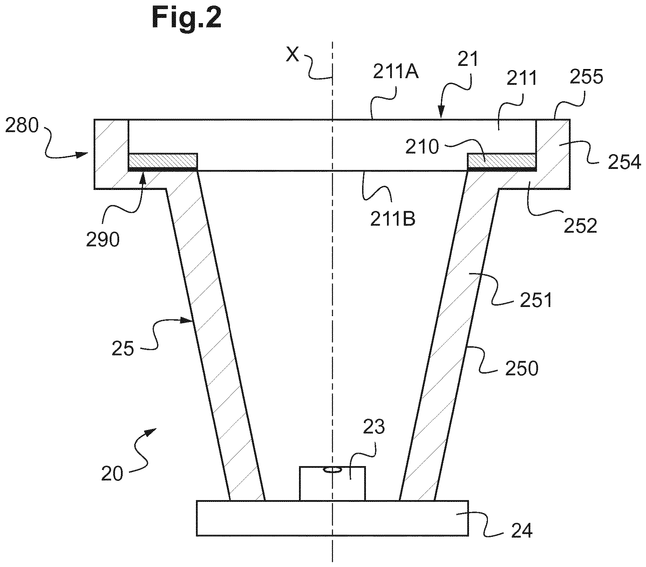

Sur la figure 2, on a représenté plus précisément le dispositif de génération 20 d'images de l'afficheur tête haute 1 en coupe.

Ce dispositif de génération 20 d'images comprend ici au moins une source de lumière 23, un écran 21 rétroéclairé par cette source de lumière 23, et un réflecteur 25.

Dans l'exemple représenté, le dispositif de génération 20 d'images comprend en réalité une pluralité de sources de lumière 23 montées sur un support 24.

Les sources de lumières 23 sont ici alignées perpendiculairement au plan de coupe de la figure 2.

Plus précisément, chaque source de lumière 23 est ici une diode électroluminescente (ou LED pour « Light Emitting Diode »), et l'ensemble de ces LEDs est monté sur un circuit imprimé jouant le rôle de support 24.

Ici, il est prévu un radiateur à dissipation thermique (non représenté) placé à l'arrière du support 24 desdites sources de lumière 23, de manière à dissiper en partie la chaleur générée par lesdites sources de chaleur 23.

Avantageusement, le réflecteur 25 et le support 24 sont en contact thermique, de sorte que le radiateur à dissipation thermique des sources de lumière est également adapté à dissiper la chaleur du réflecteur 25.

En variante, notamment lorsqu'on utilise une technique de montage direct de la puce (ou « *On Chip Board »),* on peut utiliser, en tant que support, le dissipateur thermique usuellement associé aux sources de lumière.

En variante encore, on pourrait prévoir d'isoler thermiquement le support des sources lumières et le réflecteur, de sorte que le support ne puisse pas transmettre de chaleur au réflecteur, et inversement.

Dans cette dernière variante, on peut par exemple placer une pièce réalisée en un matériau isolant thermiquement, typiquement en plastique, entre le support des sources de lumière et le réflecteur. On peut également placer une membrane d'isolation thermique entre le support des sources de lumière et le réflecteur.

Avantageusement, le support des sources de lumière ne transmet alors pas de chaleur au réflecteur.

On propose ici de disposer les LEDs sous forme d'une unique rangée d'une pluralité de sources de lumière 23, comprenant ici quatre sources de lumière 23. En variante, on pourrait par exemple envisager que la pluralité de sources de lumière comprenne entre deux et dix sources de lumière, par exemple disposées sur une ou deux rangées.

Les sources de lumières 23 sont ici adaptées à rétroéclairer l'écran 21, ledit écran 21 étant placé à distance d'elles. Autrement dit, l'écran 21 est éclairé, sur sa face arrière par les sources de lumière 23.

Dans l'exemple de réalisation proposé, l'écran 21 est un écran à cristaux liquides (ou LCD pour *"Liquid Crystal Display"*)*,* par exemple à transistors en couche mince (ou TFT pour *"Thin-Film Transistor').*

Plus précisément, l'écran comporte ici une portion de renfort 210 adaptée à renforcer l'écran 21, et une portion d'affichage 211 adaptée à générer les images lorsqu'elle est rétroéclairée.

La portion d'affichage 211 comprend une matrice d'éléments de transmittance variable adaptés à former les pixels d'une image à afficher lorsqu'ils sont rétroéclairés par les sources de lumière 23.

La portion d'affichage 211 de l'écran 21 comprend une face avant 211A qui forme la face avant de l'écran 21 et qui est globalement plane.

La portion d'affichage 211 comprend en outre une face arrière 211B qui présente une zone centrale globalement plane délimitée sur son pourtour par un décroché, en retrait par rapport à ladite zone centrale.

Ainsi, l'épaisseur de la portion d'affichage 211 n'est pas constante : elle est plus faible sur la périphérie de l'écran 21 qu'en son centre.

La portion de renfort 210 forme ici un cadre, de préférence rectangulaire, contre lequel est plaquée la portion d'affichage 211 de l'écran 21.

Plus précisément, la portion de renfort 210 est ici clipsée contre la portion d'affichage 211, dans une région dite «technique» de cette portion d'affichage 211, à savoir une région périphérique non rétroéclairée de la portion d'affichage 211.

Plus précisément, la portion de renfort 210 de l'écran 21 est adaptée à être insérée dans le décroché de la portion d'affichage 211 de sorte que l'écran 21, dans son ensemble, présente une face arrière plane.

Avantageusement, la portion de renfort 210 de l'écran 21 est également adaptée à protéger l'écran 21 d'éventuelles décharges électriques provenant du véhicule.

Cette portion de renfort 210 est en outre adaptée à protéger le conducteur, ou tout autre utilisateur, contre d'éventuelles décharges électrostatiques pouvant survenir par contact entre ledit conducteur et l'afficheur tête haute.

La portion de renfort 210 est ici réalisée en un matériau à la fois rigide et conducteur thermique. Par exemple, elle est réalisée en un matériau métallique tel qu'un alliage métallique rigide comme l'acier inoxydable.

Ainsi, la portion de renfort 210 est adaptée à drainer la chaleur provenant de la portion d'affichage 211 de l'écran 21.

Le réflecteur 25 est disposé entre les sources de lumière 23 et l'écran 21 de manière à réfléchir au moins en partie la lumière émise par les sources de lumière 23 en direction de l'écran 21.

En outre, de manière remarquable, le réflecteur 25 définit un logement 280 conçu pour recevoir l'écran 21 de sorte que ledit réflecteur 25 présente une zone de contact thermique avec ledit écran 21.

Ici, le réflecteur 25 est fermé, d'un côté par l'écran 21, et de l'autre côté par les sources de lumière 23 (à savoir en pratique par le support 24 des sources de lumière 23).

Ainsi, le dispositif de génération 20 d'images forme une enceinte close.

Avantageusement, les éléments internes du dispositif de génération d'images sont alors protégés des poussières ou autres agressions extérieures.

L'enceinte close assure également qu'aucun rayon parasite ne sera émis depuis les sources de lumière 23 directement en direction des autres éléments de l'afficheur tête haute 1. Autrement dit, le miroir de repliement 30 et/ou la lame semi-transparente 10 ne recevront du dispositif de génération 20 d'images que les rayons ayant traversé l'écran 21.

Plus précisément, pour remplir les trois fonctions de réflexion, de logement d'écran et de conduction thermique, le réflecteur 25 s'étend selon un axe principal X d'extension et comporte une portion de réflexion 250 et une portion de support 255.

La portion de réflexion 250 présente une forme globalement évasée, ou tronconique, depuis les sources de lumière vers la portion de support 255.

Elle comporte à cet effet quatre parois 251 se faisant face deux à deux, et qui s'étendent légèrement à l'oblique par rapport à l'axe principal X d'extension, depuis les sources de lumière 23 vers ladite portion de support 255 du réflecteur 25.

Les quatre parois 251 sont jointives de sorte que la portion de réflexion 250 présente, à une extrémité, une première ouverture où sont logées les sources de lumière 23, et, à l'autre extrémité, une deuxième ouverture de surface supérieure à celle de la première ouverture, à partir de laquelle s'étend la portion de support 255 du réflecteur 25.

La face interne de la portion de réflexion 250 du réflecteur 25 présente un coefficient de réflexion élevé (par exemple réflexion diffuse). A cet effet, elle peut par exemple être de couleur blanche. Elle peut en variante être recouverte d'une couche réfléchissante (par exemple de chrome ou d'aluminium) afin d'obtenir un coefficient de réflexion élevé (par exemple réflexion spéculaire).

Dans l'exemple représenté ici, les quatre parois 251 sont planes. En variante, les parois peuvent prendre toute forme particulièrement adaptée à réfléchir le maximum de lumière vers l'écran.

Ainsi, la forme et le matériau de la face interne du réflecteur 25 sont particulièrement adaptés à réfléchir l'ensemble des rayons lumineux émis par les sources de lumière 23 en direction de l'écran 21.

Chaque paroi 251 est ici prolongée par un méplat 252 qui s'étend vers l'extérieur dudit réflecteur 25, dans un plan globalement parallèle au support 24 des sources de lumière 23.

Les méplats 252 sont adaptés à accueillir la portion de renfort 210 de l'écran 21, tel que cela est représenté en figure 2.

Chaque méplat 252 est lui-même prolongé par un rebord 254, qui s'étend globalement perpendiculairement audit méplat 252 correspondant, en s'éloignant des sources de lumière 23.

Ainsi, chaque rebord 254 est globalement parallèle à l'axe principal X d'extension du réflecteur 25.

La portion de support 255 du réflecteur 25 est ainsi formée par les quatre méplats 252 et par les quatre rebords 254 prolongeant les quatre parois 251.

La portion de support 255 définit ainsi le logement 280 de réception de l'écran 21.

Plus précisément, les rebords 254 de la portion de support 255 entourent l'écran 21 en formant un cadre autour dudit écran 21 lorsque ce dernier est au contact des méplats 252 dudit réflecteur 25.

Grâce à la portion de support 255 du réflecteur 25, l'écran 21 est intégré au réflecteur 25, ce qui engendre un gain de place pour l'afficheur tête haute 1. Le dispositif de génération d'images est ainsi plus facilement intégrable dans une planche de bord de véhicule automobile.

Avantageusement, le réflecteur 25 sert en outre ici de dissipateur thermique à l'écran 21.

Plus précisément, le réflecteur 25 est adapté à évacuer la chaleur qui est accumulée dans l'écran 21 (du fait de l'absorption, par l'écran, d'une partie de la lumière le rétroéclairant).

Pour ce faire, le réflecteur 25 présente une zone de contact thermique 290 avec l'écran 21.

La zone de contact thermique 290 est située sur une périphérie d'au moins une des faces dudit écran 21.

Ici, la zone de contact thermique 290 est située sur toute la périphérie de la face arrière de l'écran 21. Avantageusement, cela permet de transmettre plus facilement au réflecteur 25 la chaleur accumulée dans ledit écran 21, cette chaleur étant d'abord accumulée sur la face arrière de l'écran puisqu'elle provient du flux de lumière rétroéclairant l'écran 21.

En pratique, la zone de contact thermique 290 entre l'écran 21 et le réflecteur 25 est formée par la portion de renfort 210 dudit écran 21.

Autrement dit, la zone de contact thermique 290 est ici située au niveau des méplats 252 du réflecteur 25, ces derniers étant en contact thermique avec la portion de renfort 210 de l'écran 21.

Pour que le réflecteur 25 puisse supporter l'écran 21 tout en assurant une conduction thermique efficace, le réflecteur 25 est réalisé en un matériau à la fois rigide et bon conducteur de chaleur, c'est-à-dire adapté à drainer la chaleur depuis la portion de renfort 210 de l'écran 21 vers les parois 251 du réflecteur 25.

Ici, il est réalisé en un matériau métallique tel qu'un alliage métallique, par exemple en acier inoxydable.

En variante, le réflecteur peut être réalisé en un matériau polymère métallisé en surface, c'est-à-dire recouvert d'une fine couche métallique, telle qu'une couche d'argent, d'aluminium, ou de tout autre métal. La fine couche métallique est réalisée par un traitement de surface classique.

En pratique, le matériau principal du réflecteur est alors le matériau polymère, et une face interne (ou externe) du réflecteur est métallisée. Le matériau polymère utilisé, plus couramment appelé plastique est par exemple le polycarbonate (abrégé en PC), le Polycarbonate Haute Température (abrégé en PC HT), ou encore le Polyméthacrylate de méthyle (abrégé en PMMA).

En variante encore, le réflecteur peut être réalisé en un matériau polymère ionique rigide, voire en un matériau polymère. Un exemple de matériau polymère ionique est le Makrolon® TC8030 (polycarbonate thermo-conducteur).

On prévoit ici que le contact thermique soit un contact physique entre la portion de renfort 210 de l'écran 21 et le réflecteur 25. A cet effet, la portion de renfort 210 de l'écran 21 et les méplats 252 de la portion de support 255 du réflecteur 25 sont prévus pour être parfaitement jointifs, c'est-à-dire pour qu'ils soient en contact, sans couche d'air intermédiaire.

En variante, on peut prévoir que l'écran et le réflecteur soient reliés par l'intermédiaire d'un pont thermique.

Par un effet de conduction thermique, la chaleur contenue dans l'écran 21 est alors susceptible d'être transférée depuis la portion d'affichage 211 de l'écran 21, vers la portion de renfort 210 de l'écran 21 puis vers le réflecteur 25. Le réflecteur 25 répartit la chaleur sur toute sa surface, c'est-à-dire dans les quatre parois 251 qu'il comporte. Les parois 251 étant en contact avec l'air, la chaleur peut ensuite être évacuée dans l'air, par conduction et/ou rayonnement, puis éventuellement par convection dans l'air.

En outre, lorsque le support 24 des sources de lumière 23 est lui-même un dissipateur thermique, ou lorsqu'il est associé à un radiateur de dissipation thermique, la chaleur répartie dans les parois 251 du réflecteur est également dissipée par ledit support 24 des sources de lumière 23.

Ainsi, le réflecteur 25, seul ou combiné au support 24 des sources de lumière 23, permet de refroidir efficacement l'écran 21 et/ou évite l'échauffement de l'écran 21. Le conducteur du véhicule peut alors obtenir le niveau de luminosité qu'il désire pour l'image virtuelle vue sur la lame semi-transparente 10.

Le réflecteur 25 du dispositif de génération 20 d'images selon l'invention est donc adapté à remplir plusieurs fonctions, à savoir, sa fonction première de réflecteur, celle de support d'écran et également celle de radiateur thermique, tout en conférant une grande compacité audit dispositif de génération 20 d'images.

Selon une variante non représentée, il peut être prévu un diffuseur disposé à l'avant du réflecteur, du côté de la face arrière de l'écran. Un tel diffuseur peut être réalisé au moyen d'un film ayant une face lisse tournée vers les sources de lumière et une face grainée opposée, tournée vers la face arrière de l'écran, qui produit la diffusion de la lumière.

Ce diffuseur serait placé directement au contact de la portion d'affichage de l'écran, au niveau de la zone centrale de cette portion d'affichage, sur la face arrière de l'écran.

La portion de renfort de l'écran resterait inchangée, de sorte que la zone de contact thermique entre le réflecteur et l'écran resterait inchangée.

En variante encore, on pourrait envisager que chaque rebord de la portion de support du réflecteur soit prolongé par un deuxième méplat, s'étendant parallèlement au premier méplat déjà prévu. Ainsi, l'écran serait pris en sandwich entre les deux méplats et le rebord, et la zone de contact thermique entre l'écran et le réflecteur serait agrandie.

## Revendications

1. Dispositif de génération (20) d'images comprenant :
- au moins une source de lumière (23),
- un écran (21) adapté à être rétroéclairé par ladite source de lumière, et
- un réflecteur (25) disposé entre ladite source de lumière (23) et ledit écran (21), et adapté à réfléchir au moins en partie la lumière émise par la source de lumière (23),
**caractérisé en ce que** ledit réflecteur (25) définit un logement (280) conçu pour recevoir l'écran (21) de sorte que ledit réflecteur (25) présente une zone de contact thermique (290) avec ledit écran (21),
dans lequel le réflecteur (25) s'étend selon un axe principal (X) d'extension et comporte une portion de réflexion (250) et une portion de support (255), ladite portion de support (255) définissant ledit logement (280) conçu pour recevoir l'écran (21) et comportant :
- un méplat (252) formant au moins en partie la zone de contact thermique (290) avec l'écran (21), et
- un rebord (254) qui s'élève à partir dudit méplat (252) de manière à entourer l'écran (21) et
dans lequel ladite zone de contact thermique (290) est située sur une périphérie d'au moins une des faces dudit écran (21) et
dans lequel l'écran (21) comporte une portion de renfort (210) formant la zone de contact thermique (290) entre l'écran (21) et le réflecteur (25) et
dans lequel ladite portion de renfort (210) de l'écran (21) forme un cadre contre lequel est plaquée une portion d'affichage (211) dudit écran (21) et
dans lequel ladite portion de renfort (210) de l'écran (21) est réalisée en un matériau métallique.

2. Dispositif de génération (20) d'images selon la revendication 1, dans lequel le réflecteur (25) est réalisé en un matériau métallique.

3. Dispositif de génération (20) d'images selon l'une des revendications 1 à 2, dans lequel le réflecteur (25) est réalisé en un matériau polymère métallisé en surface.

4. Dispositif de génération d'images selon l'une des revendications 1 à 3, dans lequel le réflecteur (25) est fermé d'un côté par ledit écran (21), de l'autre par un support (24) de la source de lumière (23), de sorte que ledit dispositif de génération (20) d'images forme une enceinte close.

5. Afficheur tête haute (1) comprenant un dispositif de génération (20) d'images selon l'une des revendications 1 à 4 et un dispositif de projection (30) d'images adapté à transmettre en direction d'une lame semi-transparente (10) les images générées par le dispositif de génération (20) d'images.

6. Afficheur tête haute (1) selon la revendication 5, dans lequel le dispositif de projection (30) d'images comprend un miroir agencé de manière à réfléchir en direction de la lame semi-transparente (10) les images générées par le dispositif de génération (20) d'images.

## Patentansprüche

1. Bilderzeugungsvorrichtung (20), die enthält:
- mindestens eine Lichtquelle (23),
- einen Schirm (21), der geeignet ist, von der Lichtquelle hinterleuchtet zu werden, und
- einen Reflektor (25), der zwischen der Lichtquelle (23) und dem Schirm (21) angeordnet und geeignet ist, das von der Lichtquelle (23) emittierte Licht zumindest teilweise zu reflektieren,
**dadurch gekennzeichnet, dass** der Reflektor (25) eine Aufnahme (280) definiert, die konzipiert ist, den Schirm (21) aufzunehmen, so dass der Reflektor (25) eine thermische Kontaktzone (290) mit dem Schirm (21) aufweist, wobei der Reflektor (25) sich gemäß einer Hauptausdehnungsachse (X) erstreckt und einen Reflexionsabschnitt (250) und einen Tragabschnitt (255) aufweist, wobei der Tragabschnitt (255) die Aufnahme (280) definiert, die konzipiert ist, um den Schirm (21) aufzunehmen und aufweist:
- eine Abflachung (252), die mindestens zum Teil die thermische Kontaktzone (290) mit dem Schirm (21) bildet, und
- eine Randleiste (254), die sich ausgehend von der Abflachung (252) erhebt, um den Schirm (21) zu umgeben, und
wobei die thermische Kontaktzone (290) sich auf einem Umfang mindestens einer der Seiten des Schirms (21) befindet, und
wobei der Schirm (21) einen Verstärkungsabschnitt (210) aufweist, der die thermische Kontaktzone (290) zwischen dem Schirm (21) und dem Reflektor (25) bildet, und wobei der Verstärkungsabschnitt (210) des Schirms (21) einen Rahmen bildet, gegen den ein Anzeigeabschnitt (211) des Schirms (21) gedrückt ist, und
wobei der Verstärkungsabschnitt (210) des Schirms (21) aus einem metallischen Material hergestellt ist.

2. Bilderzeugungsvorrichtung (20) nach Anspruch 1, wobei der Reflektor (25) aus einem metallischen Material hergestellt wird.

3. Bilderzeugungsvorrichtung (20) nach einem der Ansprüche 1 bis 2, wobei der Reflektor (25) aus einem an der Oberfläche metallbeschichteten Polymermaterial hergestellt wird.

4. Bilderzeugungsvorrichtung nach einem der Ansprüche 1 bis 3, wobei der Reflektor (25) auf einer Seite vom Schirm (21) und auf der anderen von einem Träger (24) der Lichtquelle (23) verschlossen wird, so dass die Bilderzeugungsvorrichtung (20) einen geschlossenen Raum bildet.

5. Head-up-Display (1), das eine Bilderzeugungsvorrichtung (20) nach einem der Ansprüche 1 bis 4 und eine Bildprojektionsvorrichtung (30) enthält, die geeignet ist, die von der Bilderzeugungsvorrichtung (20) erzeugten Bilder in Richtung einer halbtransparenten Lamelle (10) zu übertragen.

6. Head-up-Display (1) nach Anspruch 5, wobei die Bildprojektionsvorrichtung (30) einen Spiegel enthält, der so angeordnet ist, dass er die von der Bilderzeugungsvorrichtung (20) erzeugten Bilder in Richtung der halbtransparenten Lamelle (10) reflektiert.

## Claims

1. Image-generating device (20) comprising:
- at least one light source (23),
- a screen (21) adapted to be backlit by said light source, and
- a reflector (25) arranged between said light source (23) and said screen (21), and adapted to at least partly reflect the light emitted by the light source (23),
**characterized in that** said reflector (25) defines a recess (280) designed to receive the screen (21) in such a way that said reflector (25) has a zone of thermal contact (290) with said screen (21),
wherein the reflector (25) extends along a main axis (X) of extension and comprises a reflection portion (250) and a support portion (255), said support portion (255) defining said recess (280) designed to receive the screen (21) and comprising:
- a flat (252) at least partly forming the zone of thermal contact (290) with the screen (21), and
- a rim (254) which rises from said flat (252) so as to surround the screen (21) and
wherein said zone of thermal contact (290) is situated over a periphery of at least one of the faces of said screen (21) and
wherein the screen (21) comprises a reinforcing portion (210) forming the zone of thermal contact (290) between the screen (21) and the reflector (25) and
wherein said reinforcing portion (210) of the screen (21) forms a frame against which is pressed a display portion (211) of said screen (21) and
wherein said reinforcing portion (210) of the screen (21) is produced in a metal material.

2. Image-generating device (20) according to Claim 1, wherein the reflector (25) is produced in a metal material.

3. Image-generating device (20) according to one of Claims 1 and 2, wherein the reflector (25) is produced in a surface-metalized polymer material.

4. Image-generating device according to one of Claims 1 to 3, wherein the reflector (25) is closed on one side by said screen (21), on the other by a support (24) of the light source (23), such that said image-generating device (20) forms a closed enclosure.

5. Head-up display (1) comprising an image-generating device (20) according to one of Claims 1 to 4 and an image-projecting device (30) adapted to transmit to a semi-transparent plate (10) the images generated by the image-generating device (20).

6. Head-up display (1) according to Claim 5, wherein the image-projecting device (30) comprises a mirror arranged so as to reflect to the semi-transparent plate (10) the images generated by the image-generating device (20).
